# EUROPEAN PATENT APPLICATION

(11) **EP 4 787 053 A1**
(43) Date of publication of application: **05.08.2026**
(21) Application number: 26152791.5
(22) Date of filing: 20.01.2026
(51) Int. Cl.: G02B 27/01, B60K 35/23

(54) **SYSTEM AND METHOD FOR CONTROLLING TEMPERATURE OF DISPLAY SYSTEM**

(30) Priority: 03.02.2025 US 202519043939
(71) Applicant: Distance Technologies Oy, 00530 Helsinki (FI)
(72) Inventor: Savolainen, Petri, 00530 Helsinki (FI); Strandborg, Mikko, 00530 Helsinki (FI); Konttori, Urho, 00530 Helsinki (FI); Vehkaperä, Ville, 00530 Helsinki (FI)
(74) Representative: Moosedog Oy

(57) **Abstract**

Disclosed is system (100) for controlling temperature of display system (102) comprising display (104, 400) and optical substrate (106) configured for autostereoscopic viewing, system comprising: heat transfer element (108) arranged at least in relation to optical substrate, heat transfer element is visually imperceptible when system is in use; heat exchanger (110) thermally coupled to heat transfer element; first temperature sensor (112) operable to measure first temperature of display system at first region; and processor (114) configured to: receive first temperature, from first temperature sensor; detect when first temperature lies outside predefined operating temperature range of display system; and control heat exchanger to bring first temperature within predefined operating temperature range, via exchange of thermal energy between heat exchanger and heat transfer element, upon said detection.

## Description

### TECHNICAL FIELD

The present disclosure relates to systems for controlling temperature of display systems. Moreover, the present disclosure relates to methods for controlling temperature of display systems.

### BACKGROUND

In modern automotive design, the ability to provide essential information to users in a seamless and efficient manner is essential for enhancing both safety and driving experience. Typically, head-up displays (HUDs) systems have emerged as a key technology, projecting vital information, such as speed, navigation, warnings, and similar, directly onto a windshield, ensuring that users can access this information without looking away from road. Notably, for HUD systems to function reliably in a real-world environment, said HUD systems must perform consistently under a wide range of temperatures. However, automotive environments can be particularly harsh, subjecting the HUD systems to extreme cold and heat, which poses a significant challenge in maintaining clarity, responsiveness, and operational integrity of the display.

Conventionally, existing HUD systems and other display technologies have attempted to manage temperature variations by relying on general-purpose thermal management strategies. For example, manufacturers have developed techniques, such as passive and active cooling techniques, which includes improved ventilation and heat-dissipating materials. However, these general-purpose thermal management strategies are often limited in effectiveness, particularly under extreme environmental conditions. In many cases, the existing HUD systems may apply uniform heating or uniform cooling across an entire display without adequately addressing localized temperature variations that can impact performance of critical areas of the display.

Moreover, traditional displays, such as liquid crystal displays (LCDs), are designed to function within a standard temperature range. For example, the standard temperature range may lie from +5 degrees Celsius (°C) to +50°C. This range is suitable for many applications, but in automotive environments, where temperatures can drop to as low as -25°C during cold winter nights or rise to over +70°C under direct sunlight, the traditional displays can falter. In such extreme conditions, the HUD systems may experience delayed start-up, reduced visibility, image distortion, even permanent damage due to an overheating or freezing, and similar. Additionally, the HUD systems must not only withstand these temperature extremes but also become operational swiftly upon starting a vehicle. As a result, the HUD systems fail to function correctly under these extreme temperature conditions until an interior of the vehicle cools down or warms up.

Therefore, in light of the foregoing discussion, there exists a need to overcome the aforementioned drawbacks.

### SUMMARY

The aim of the present disclosure is to provide a system and a method for controlling temperature of a display system to maintain operating conditions of said display system, to ensure consistent performance, prevent thermal damage, and enhance reliability and longevity of the display system under varying environmental conditions. The aim of the present disclosure is achieved by a system and a method for controlling temperature of a display system as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates a block diagram of a system for controlling temperature of a display system, in accordance with an embodiment of the present disclosure;
FIGs. 2A, and 2B, illustrate an exemplary implementation of the heat transfer element within the display system of FIG. 1, in accordance with an embodiment of the present disclosure;
FIGs. 3A, 3B, and 3C, illustrate an exemplary implementation of the heat transfer element within the display system of FIG. 1, in accordance with different embodiment of the present disclosure;
FIG. 4 illustrates an exemplary visualization of a display divided into plurality of regions within a system, in accordance with an embodiment of the present disclosure;
FIG. 5 illustrates an exemplary implementation of a system for controlling temperature of a display system of FIG. 1 in a device, in accordance with an embodiment of the present disclosure; and
FIG. 6 illustrates steps of a method for controlling temperature of a display system comprising a display and an optical substrate configured for autostereoscopic viewing, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for controlling temperature of a display system comprising a display and an optical substrate configured for autostereoscopic viewing, the system comprising:
a heat transfer element arranged at least in relation to the optical substrate, wherein the heat transfer element is visually imperceptible when the system is in use;
a heat exchanger thermally coupled to the heat transfer element;
a first temperature sensor operable to measure a first temperature of the display system at a first region; and
a processor configured to:
   receive the first temperature, from the first temperature sensor;
   detect when the first temperature lies outside a predefined operating temperature range of the display system; and
   control the heat exchanger to bring the first temperature within the predefined operating temperature range, via exchange of thermal energy between the heat exchanger and the heat transfer element, upon said detection.

The present disclosure provides the aforementioned first aspect for controlling temperature of the display system. Beneficially, the heat transfer element being visually imperceptible during use, does not interfere with the autostereoscopic viewing. Users can benefit from three-dimensional or multi-view displays without any visible obstruction or degradation in clarity, which is especially important in applications requiring high visual fidelity. The use of the heat exchanger thermally coupled to the heat transfer element enables the system to regulate temperature effectively without adding bulk or obstructive components. By maintaining the first temperature of the display system within the predefined operating temperature range, the display system ensures optimal performance of the display. This reduces issues such as color distortion, uneven brightness, response lag, and similar, that can occur when components of the display system operate outside their predefined operating temperature range. This thermal management can be adjusted by the processor based on real-time temperature data, ensuring that the display system remains within the predefined operating temperature range. It will be appreciated that by preventing overheating or an exposure to extreme temperatures, high or low, the system reduces stress on components of the display system, which in turn prolongs their operational lifespan. Moreover, controlled temperature conditions help to mitigate thermal expansion or contraction, thereby reducing likelihood of mechanical or material degradation over time. This ensures that the display system maintains consistent performance and reliability, thereby enhancing durability and longevity of the system.

In a second aspect, the present disclosure provides a a method for controlling temperature of a display system comprising a display and an optical substrate configured for autostereoscopic viewing, the method comprising:
receiving a first temperature of the display system from a first temperature sensor that is operable to measure the first temperature at a first region;
detecting when the first temperature lies outside a predefined operating temperature range of the display system; and
controlling a heat exchanger to bring the first temperature within the predefined operating temperature range, via exchange of thermal energy between the heat exchanger and a heat transfer element, upon said detection, wherein the heat transfer element is arranged at least in relation to the optical substrate, and wherein the heat transfer element is visually imperceptible when the system is in use.

The present disclosure provides the aforementioned second aspect for controlling temperature of the display system. By receiving the first temperature of the display system from the first temperature sensor and detecting deviations from the predefined operating temperature range, the method ensures precise monitoring and control of thermal conditions in real time. The ability of the method to bring the first temperature within the predefined operating temperature range, through an exchange of the thermal energy between the heat transfer element and the heat exchanger, prevents overheating or freezing, thereby improving overall reliability and longevity of the display system. The method for controlling temperature enables for easy implementation across various display systems, regardless of specific hardware configuration. This makes the display system adaptable to different autostereoscopic display setups, enabling manufacturers to integrate temperature control seamlessly. The method is simple, robust, and efficient, providing reliable temperature control for the display system while minimizing energy consumption and operational complexity.

The term "*display system*" refers to an integrated arrangement of components designed to present visual content to a user (namely, a viewer). The term "*display*" refers to a device or a panel that serves as primary visual output surface for presenting digital images, text, graphical content, and similar. The display may feature various layers, including backlighting or pixel arrays, to achieve desired brightness, color accuracy, and resolution. Examples of the display may include, but are not limited to, a liquid crystal display (LCD), an organic light-emitting diode (OLED) display, a micro-LED display, an electrophoretic display (EPD), a plasma display, and a projection-based display. Herein, the display is positioned behind the optical substrate, allowing an emitted light to pass through the optical substrate for an enhanced visual effects or for the autostereoscopic viewing. The term "*optical substrate*" refers to a transparent or a semi-transparent layer placed in a path of light of the display system, which is designed to influence the way light is emitted or perceived. The term "*autostereoscopic viewing*" refers to a method of displaying three-dimensional (3D) images or 3D videos without a need for special glasses or headgear.

Optionally, the optical substrate configured for autostereoscopic viewing comprises at least one of: a lenticular array element, a parallax barrier, a layer of an optical material, a diffuser. In this regard, the term "*lenticular array element*" refers to a set of cylindrical lenses or lenticules arranged in a uniform pattern on the optical substrate. This uniform pattern ensures consistent optical effects across the display. Each lenticule is designed to focus the light in different directions, enabling the display to project different images to each eye of the viewer, which is essential for the autostereoscopic viewing. The lenticular array element manipulates the light emitted by the display, creating distinct viewing angles that convey depth, thus allowing perception of 3D images. Optionally, the lenticular array element have a thickness which lies in a range of 5 millimeters to 7 millimeters, ensuring adequate eye separation and proper focal length for the autostereoscopic viewing at specified distances. The thickness depends on factors like the display size, resolution, and the intended viewing distance. This thickness is designed to optimize an optical pathway, allowing each lenticule to direct the light effectively toward the eyes of the viewer. Additionally, while a surface of the lenticular array element features a lenticular shape to achieve the desired optical effects, an intermediate space within the lenticular array element can be composed of the heat transfer element. This intermediate space, typically designed to integrate the heat transfer element that serves to regulate thermal conditions of the lenticular array element without disrupting its optical performance. In this regard, the heat transfer element, positioned within this intermediate space, is fabricated from materials with optical properties, such as the refractive index closely matching that of material of the lenticular array element. This alignment ensures that integration of the heat transfer element does not produce optical distortions or artifacts, thereby maintaining clarity and precision of the light propagation required for the autostereoscopic viewing. Moreover, by leveraging the intermediate space, the heat transfer element enables efficient dissipation or distribution of the heat generated by the display system, particularly during prolonged or high-intensity operation. This thermal regulation minimizes risk of thermal expansion or deformation of the lenticular array element, which could otherwise lead to misalignment of the lenticules and affect an optical alignment required for rendering the 3D images. It will be appreciated that the lenticular array element provides a fundamental optical structure in the autostereoscopic viewing by directing the light towards predefined viewing zones, thereby ensuring that the viewer perceives the 3D images without the need for special glasses.

Moreover, the term "*parallax barrier*" refers to a type of an optical element composed of a layer with uniformly-spaced slits that selectively direct the light towards specific viewing angles. The parallax barrier works by ensuring that different images are presented to each eye of the viewer, creating an illusion of depth and enabling the autostereoscopic viewing.

The parallax barrier selectively blocks portions of the emitted light based on the viewer's perspective, aligning specific light rays with each eye, thus presenting different views to left eye and right eye. It will be appreciated that this optical mechanism is essential for creating depth perception by blocking the view of images from one angle and presenting a distinct image to each eye of the viewer, which is a core principle of the autostereoscopic viewing. Moreover, the term "*layer of an optical material*" refers to a thin film or a coating made from materials that allow passage of light therethrough. The layer of the optical element is designed to interact with the light in a controlled manner, affecting the way light propagates through or reflects off the surface of the display system. The layer of the optical material can manipulate direction of the light, control dispersion, and enhance 3D effects or image quality of the display. It will be appreciated that this layer is essential for adjusting behavior of the light across surface of the display, thereby improving visual quality of the autostereoscopic viewing by managing paths of the light and enhancing the 3D viewing experience. The layer of the optical element is applied to specific regions of the optical substrate or directly to the surface of the display, depending on the design of the display system. For example, the layer of the optical substrate may be positioned on the optical substrate to optimize emission of the light, or it may be applied to the cover glass or protective surface of the display for enhanced interaction with the emitted light. Moreover, the term "*diffuser*" refers to an optical component or a layer designed to scatter the light in multiple directions, thereby producing a uniform distribution of the light across surface of the display. In the autostereoscopic viewing, the diffuser can assist in maintaining consistent brightness and clarity from all viewing angles, ensuring that the 3D effect is uniform across an entire display. The diffuser is often made from materials such as frosted glass, patterned films, plastic polymers, and similar, with light-scattering properties.

A technical effect of the aforementioned feature is that it enables the display system to achieve the autostereoscopic viewing by directing the light in a way that creates distinct views for each eye of the viewer, thereby facilitating perception of depth.

Throughout the present disclosure, the term "*heat transfer element*" refers to a component designed to facilitate transfer of the thermal energy between the optical substrate and surrounding components, such as the display, or other elements of the display system that are thermally active. In the display system, the heat transfer element serves as an intermediary for conducting or dissipating heat between the heat exchanger and specific components of the display system, such as the optical substrate. Typically, the heat transfer element is made of materials with high thermal conductivity to efficiently regulate temperature across targeted areas without introducing significant thermal resistance. The term "*visually imperceptible*" refers to a characteristic of the heat transfer element that does not interfere with or distort transmission of the light through the display system. When the heat transfer element is visually imperceptible, the heat transfer element remains undetectable to a human eye under standard operating conditions, thereby preserving clarity, brightness, and color fidelity of the display. This property is essential for applications where transparency and unobstructed viewing are essential, for example, such as in head-up displays (HUDs), autostereoscopic displays, and similar. Notably, the heat transfer element is entirely hidden or nearly-entirely hidden by elements of the display system (such as the optical substrate). Herein, by the term "*nearly-entirely hidden*", it is meant that at least 90% of the heat transfer element is hidden. In other words, 90 percent to 100 percent of the heat transfer element is hidden. For example, 90%, 91%, 92%, 93%, 95%, 97% or 99% up to 94%, 96%, 97%, 98%, 99%, or 100% of the heat transfer element may be hidden.

Herein, the heat transfer element, made from materials that are visually imperceptible, is arranged at least in relation to the optical substrate or positioned nearby to facilitate heat exchange without impacting optical qualities of the display. Optionally, the heat transfer element can be arranged in proximity to the light-emitting surface of the display, the cover glass of the display system, within the optical substrate itself, or similar, ensuring efficient thermal management while maintaining an intended visual performance of the display system. It will be appreciated that the inclusion of the heat transfer element arranged at least in relation to the optical substrate facilitates efficient conduction and dissipation of the thermal energy between the heat exchanger and elements of the display system, such as the optical substrate. This ensures that the display system operates within the predefined operating temperature range, thereby preventing temperature-related damage to heat-sensitive elements (for example, such as the optical substrate, a surface of the display, and similar), and optimizing performance of the display system. It will also be appreciated that the characteristic of being visually imperceptible ensures that the heat transfer element does not disrupt optical properties of the display system. The heat transfer element does not attenuate, distort, and reflect the light, thereby preserving transmission of the light through the display system. For example, the heat transfer element may be embedded within the optical substrate, positioned beneath layers of the display, integrated into hidden pathways within the optical substrate, and similar, ensuring it does not alter surface appearance.

Optionally, the heat transfer element comprises at least one of: a heat transfer liquid, a metal wiring, carbon nanotubes, a phase change material, a thin-film thermoelectric material. In this regard, the term "*heat transfer liquid*" refers to a fluid with high thermal conductivity and specific heat capacity, designed to absorb and transfer the thermal energy from one location to another. The heat transfer liquid is used in both cooling and heating applications to manage the first temperature by circulating within the display system to transfer the heat to or from essential areas. Examples of the heat transfer liquid may include, but are not limited to, ethylene glycol (commonly used in automotive and industrial cooling systems), mineral oil (used in electrical transformers and some electronics cooling), and synthetic silicone oils (used in high-temperature applications). The heat transfer liquid can circulate through the display system to absorb the excess heat from the heat-sensitive elements and efficiently dissipate it. This helps to maintain the predefined operating temperature range of the display system, thus preventing an overheating, optimizing performance, and improving durability of the display system. In addition to dissipating the excess heat, the heat transfer liquid can also be utilized to transfer the thermal energy into the display system when the display operates in colder environments.

Moreover, the term "*metal wiring*" refers to conductive metal strands, usually made of materials with high thermal conductivity, used to transfer electrical current or heat between components of the display system. In thermal management, the metal wiring is strategically integrated within the display system to conduct the heat away from the heat-sensitive elements. Example of the metal wiring may include, but are not limited to, copper wires, aluminium wires, and silver wires. The metal wiring like copper and aluminium offers high conductivity, allowing the display system to maintain efficient thermal regulation without adding significant weight or complexity. Thus, the metal wiring provides more rapid and uniform cooling, enhancing thermal management of the display system and overall stability. Moreover, the metal wiring, due to its high thermal conductivity, can efficiently distribute the heat generated by integrated heating elements to ensure uniform temperature regulation across the display system.

Moreover, the term "*carbon nanotubes*" refers to cylindrical nanostructures made of carbon atoms arranged in a hexagonal pattern, exhibiting exceptional thermal conductivity, electrical conductivity, and mechanical strength. The carbon nanotubes can transfer the heat efficiently due to their high thermal conductivity, making them suitable for heat dissipation in compact electronic devices and other advanced applications where space is limited. For example, the heat transfer element may comprise a layer of carbon nanotubes, an array of carbon nanotubes, a carbon nanotubes composite heat sink, or similar. Additionally, the carbon nanotubes offer mechanical strength, which may aid in structural integrity of the heat transfer element, particularly in compact or high-performance applications. Moreover, the carbon nanotubes, with their exceptional thermal properties, can not only dissipate the heat but also facilitate rapid and uniform heat distribution when the heat is introduced, ensuring the display system warms up efficiently without thermal stress.

Moreover, the term "*phase change material*" refers to a substance that absorbs or releases a large amount of latent heat when it changes its physical state, typically from solid to liquid or vice versa. Examples of the phase change material may include, but are not limited to, paraffin wax, hydrated salts, and fatty acids. The phase change material absorbs or releases large amounts of latent heat during phase transitions, allowing the display system to temporarily store heat when the display system reaches high temperature and release it when the temperature drops. This acts as a thermal cushion, stabilizing the temperature and reducing risk of sudden temperature fluctuations that could lead to thermal stress or component failure.

Moreover, the term "*thin-film thermoelectric material*" refers to a type of semiconductor material fabricated in a thin-film form, capable of transferring heat across a temperature gradient by converting an electrical energy into the thermal energy, or vice versa. Examples of the thin-film thermoelectric material may include, but are not limited to, bismuth telluride, silicon-germanium alloys, and thin-film Peltier modules. The thin-film thermoelectric material can be used to adjust the first temperature of the display system based on real-time needs. By converting an electrical energy into the thermal energy, the thin-film thermoelectric material can either draw the heat away from essential components or add the heat to critical components, maintaining the first temperature within the predefined range of the display system.

Overall, this dual functionality of managing both the excess heat and insufficient heat ensures that the display system remains operational and delivers optimal performance across a wide range of environmental conditions. Additionally, the heat transfer element can be fabricated from various materials, for example, such as thermally conductive polymers, transparent ceramics, glass composites, and similar, enabling precise selection based on the thermal conductivity, optical properties, and mechanical strength required by the display system. This material versatility ensures that the heat transfer element aligns with the structural and functional specifications of the display, maintaining the optical clarity essential for the autostereoscopic viewing. It will be appreciated that the ability to regulate the heat (such as dissipating and introducing the heat), enhances durability, reliability, and image quality of the display system in varying environmental conditions.

A technical effect of the aforementioned feature is that it facilitates an efficient and precise thermal management, ensuring that the display system remains within the predefined operating temperature range in varying environmental conditions.

Optionally, the visual imperceptibility of the heat transfer element is implemented as at least one of:
a refractive index of the heat transfer element being matched with a refractive index of the optical substrate;
at least one of: an amount, a position, a layout, a thickness, of the heat transfer element being adjusted in a manner that minimizes visibility thereof.

In this regard, the term "*refractive index*" refers to the measure of the bending of a ray of light when passing from one medium into another. It is calculated as a ratio of speed of light in a vacuum to the speed of light in a particular medium. Notably, by the term "*minimizes visibility*", is meant that a 10% or less of the heat transfer element is visible (or perceptible). In other words, 0 percent to 10 percent of the heat transfer element is visible. For example, 0%, 1%, 2%, 3%, 5%, 7% or 9% up to 4%, 6%, 8%, 9%, or 10% of the heat transfer element may be visible. Optionally, the heat transfer element can be fabricated from a material with the refractive index that closely matches the refractive index of the optical substrate. This matching minimizes optical discontinuities or mismatches between two materials, thereby preventing visible distortion or artifacts at an interface between the heat transfer element and the optical substrate. By reducing difference in refractive indices, the light passing through the display system is not subject to noticeable refraction or scattering at boundaries between the heat transfer element and the optical substrate, thereby ensuring preservation of an optical performance of the display system. In an implementation, when refractive indices are matched, the heat transfer element remains visually imperceptible on a display viewing area of the display system. This ensures that the display system maintains its intended optical quality while benefiting from effective thermal management. It will be appreciated that aligning the refractive indices of the heat transfer element and the optical substrate improves visual clarity and uniformity of the display, thereby maintaining quality of images.

Alternatively, optionally, the heat transfer element can be implemented in a manner that minimizes its visibility through adjustments to at least one of the following: the amount, the position, the layout, and the thickness of the heat transfer element. Herein, the amount refers to an extent of the heat transfer element being used. Notably, smaller the extent of the heat transfer element in relation to the display, less noticeable it will be. The position of the heat transfer element within the optical substrate ensures that it does not obstruct transmission of the light or is not placed in a highly visible area of the display system. The layout of the heat transfer element can be optimized to ensure it does not disrupt visual aesthetics of the display system. The thickness of the heat transfer element can reduce its visibility by ensuring it does not create a noticeable optical contrast or appear as an extra layer within the display system. This minimizes any potential distortion of the light passing through the display system. Overall, this arrangement minimizes visibility of the heat transfer element, ensuring it remains visually imperceptible during an operation of the display system while still performing its thermal management function. It will be appreciated that this approach not only maintains aesthetic integrity of the display system, but also preserves optical clarity, ensuring that the viewer experiences uninterrupted visuals with high fidelity in terms of brightness, colour accuracy, and overall quality of images. Additionally, it will be appreciated that minimizing visibility of the heat transfer element helps to reduce potential reflections, scattering, refractive disruptions, or similar, which is essential for applications where display transparency and unobstructed viewing are essential.

A technical effect of the aforementioned feature is that it reduces visual disruptions within the display system, ensuring seamless optical clarity and maintaining quality of the images, while enabling effective thermal management to be integrated without affecting visual aesthetics of the display.

Throughout the present disclosure, the term "*heat exchanger*" refers to a device that facilitates transfer of heat between two mediums (for example, such as a fluidic medium, a solid medium, or similar), in order to regulate or maintain temperature of the system. Herein, the heat transfer element conducts the thermal energy away from the heat-sensitive elements. Once the heat is transferred to the heat transfer element, it is directed towards the heat exchanger, where the thermal energy is either dissipated into surrounding environment (via air, liquid, or other cooling methods) or transferred to another medium for cooling. Notably, the heat exchanger is used for both heating and cooling mechanism of the display system. It will be appreciated that the heat exchanger may include features like fins, tubes, radiators, and similar, that increase surface area for heat dissipation, thereby enabling effective cooling. A technical effect of this feature is that it enhances thermal management of the display system by ensuring efficient heat dissipation or absorption, depending on temperature regulation needs of the system.

Throughout the present disclosure, the term "*temperature sensor*" refers to a sensor that is capable of sensing a temperature of a given region of the display system. Examples of the temperature sensor may include, but are not limited to, an infrared sensor, a thermocouple, and a thermistor. All the aforesaid types of temperature sensors and their working principles are well-known in the art. The term "*first temperature sensor*" refers to a sensor that is capable of measuring the first temperature at the first region within the display system. The first temperature sensor is arranged in proximity to the display system. The term "*region*" of the display refers to a portion of the display. Notably, the term "*first region*" refers to a defined area or a specific portion within the display system where the first temperature is being measured. Optionally, the first region corresponds to a critical region of the display, where precise temperature regulation is essential to ensure optimal performance and prevent potential thermal-related issues. The first temperature sensor works by using a temperature-sensing element to detect changes in temperature of the display system at the first region. The first temperature sensor converts temperature-related physical properties (like electrical resistance or voltage) into a signal that can be interpreted by the processor. In one embodiment, the first temperature sensor is placed at the first region of the display system. In another embodiment, the first temperature sensor is placed in proximity to the first region of the display system. A primary purpose of the first temperature sensor is to monitor temperature of the display system in real-time or in near real-time. Notably, temperature regulation is essential for proper functioning and longevity of electronic displays, as excessive heat can cause performance degradation, malfunction, even permanent damage to the display system. Thus, by measuring the first temperature at the first region of the display system, the processor of the system can take proactive measures to prevent overheating and maintain the display within the predefined operating temperature range. A technical effect of this feature is that it enables the system to continuously monitor and regulate the temperature at critical areas of the display system, ensuring that the system operates within safe and optimal thermal conditions.

Throughout the present disclosure, the term "*processor*" refers to a computational element that is operable to execute the software framework. Examples of the processor may include, but are not limited to, a microprocessor, a microcontroller, a complex instruction set computing (CISC) microprocessor, a reduced instruction set computing (RISC) microprocessor, a very long instruction word (VLIW) microprocessor, or any other type of processing circuit. Notably, the processor is communicably coupled to the heat exchanger, the first temperature sensor, and a second temperature sensor.

The first temperature sensor measures the first temperature at the first region and transmits this information as a temperature value to the processor. The processor is configured to continuously or periodically read these temperature values as part of a feedback loop for thermal regulation. It will be appreciated that the ability to receive real-time temperature data from the first temperature sensor enables the processor to monitor thermal state of the display system continuously, ensuring immediate detection of any deviation from the predefined operating temperature range. The process of detecting the first temperature involves continuous or periodic monitoring of temperature data received from the first temperature sensor. It will be appreciated that when it is detected that the first temperature lies outside the predefined operating temperature range, conditions that may lead to thermal stress, overheating, inadequate performance, or similar, can be optionally proactively determined by the processor, thereby protecting the heat sensitive components and enhancing reliability of the display system.

Then, the processor is configured to compare the first temperature to the predefined operating temperature range. Notably, the term "*predefined operating temperature range*" refers to a temperature range within which the display system is operable, i.e., being able to present any virtual content. Optionally, when the display system comprises a liquid-crystal display (LCD), the predefined operating temperature range lies between +5 degree Celsius (°C) to +50°C. Moreover, for an automotive applications or displays requiring optical transparency, the predefined operating temperature range lies between -25 °C to +70 °C. This range is determined based on thermal tolerance and performance requirements of elements of the display system, ensuring that the first temperature within the predefined operating temperature range support consistent functionality, image quality, and durability.

In this regard, when the first temperature of the display system lies outside the predefined operating temperature range, there is a likelihood of the first region of the display system is non-operational, i.e., not being able to present any virtual content. In other words, the first temperature of the first region is either too high (for example, when the display system is employed in an extremely hot surrounding environment) or too low (for example, when the display system is employed in an extremely cold surrounding environment), for it to present any virtual content.

It is to be noted that such an non-operational behaviour may occur until the first region of the display system is allowed to cool down (i.e., dissipate some heat) or to warm-up (i.e., generate some heat) after the display system is switched on, such that the first temperature of the display system reaches within the predefined operational temperature range. Thus, in this regard, the processor is configured to activate and control the heat exchanger, wherein the heat exchanger is employed to control the first temperature of the display system accordingly, i.e., to bring the first temperature within the predefined operating temperature range. The heat exchanger, being thermally coupled to the heat transfer element, facilitates transfer of the thermal energy to or from the display system to bring the first temperature back within the predefined operating temperature range. In a case where the first temperature of the display system is below the predefined operating temperature range, the heat exchanger is utilised to increase the temperature of the display system by heating up the first region. In another case where the temperature of the display system is above the predefined operating temperature range, the heat exchanger is utilised to decrease the temperature of the display system by cooling down the first region. It will be appreciated that controlling the heat exchanger to adjust the first temperature within the predefined operating temperature range provides an efficient means of thermal management, maintaining optimal operating conditions without manual intervention, and thus extending lifespan of the display system and ensuring consistent visual quality.

Optionally, the arrangement of the heat transfer element in relation to the optical substrate is at least one of:
the heat transfer element is arranged within the optical substrate;
the heat transfer element is arranged between the optical substrate and a light emitting surface of the display;
the heat transfer element is arranged between the optical substrate and a cover glass of the display system.

In this regard, the term "*light emitting surface*" refers to an outermost surface or a layer of the display in the display system from which visible light is emitted to the viewer. Typically, the light emitting surface is a part of an active display element, such as the LCD, the OLED, LED panel, and similar, responsible for projecting images, colors, and visual information. The term "*cover glass*" refers to a protective outer layer of the display system, which is typically made of durable, transparent material that shields internal components from external physical damage while also allowing transmission of the light.

In one implementation, when the heat transfer element is integrated within the optical substrate, it enables direct thermal conduction from the optical substrate to the heat transfer element. This approach minimizes thermal resistance and enhances thermal conductivity, directly reducing temperature-related issues in the optical substrate. This arrangement is effective when dealing with components like autostereoscopic elements, which may generate heat. It will be appreciated that by positioning the heat transfer element within the optical substrate, the heat is efficiently managed at the source of generation, preventing heat buildup in heat-sensitive areas. It will also be appreciated that this integration helps to maintain optical and structural integrity of the display, as it minimizes the need for external cooling systems or bulkier components, thus preserving thin form factor and high performance of the display system.

Notably, the form factor refers to physical dimension, shape, and an overall design of the display system.

In another implementation, placing the heat transfer element in between the optical substrate and the light emitting surface of the display allows the heat to be drawn away from the light-emitting surface, where the heat generation is most concentrated. The heat transfer element absorbs this thermal energy and facilitates its movement towards the heat exchanger, thereby preventing overheating of the light-emitting surface and maintaining performance of the display. It will be appreciated that this placement ensures that the thermal energy is effectively removed from most heat-sensitive areas of the display, optimizing thermal management of the display system. It will also be appreciated that by said positioning of the heat transfer element, the heat can be efficiently diverted from areas of high-power consumption, improving both the longevity of components of the display system and an overall efficiency of the display system without disrupting visual output of the display.

In yet another implementation, placing the heat transfer element between the optical substrate and the cover glass enables the heat transfer element to draw an excess heat from the optical substrate to the cover glass. The cover glass, which may have a larger surface area or be made of a material suitable for heat dissipation, can then release absorbed heat into surrounding environment, thereby improving thermal management. It will be appreciated that by using the cover glass as a heat sink, an overall heat dissipation efficiency is improved, as the cover glass can spread the absorbed heat over a larger area, reducing risk of localized overheating. It will also be appreciated that this configuration minimizes an impact on the visual performance of the display system, as the heat transfer element remains positioned away from the light-emitting surface, allowing for effective cooling without affecting clarity or brightness of the display.

A technical effect of the aforementioned feature is that it enhances thermal management by efficiently dissipating the heat away from essential components of the display system, thereby preventing overheating and maintaining optimal performance.

Optionally, when the heat transfer element comprises the heat transfer liquid, the heat transfer liquid is filled in one of: a fluidic network carved within the optical substrate, or a pipe network embedded within the optical substrate. In this regard, the term "*fluidic network*" refers to a series of interconnected channels or pathways embedded within the optical substrate, designed to facilitate controlled flow of the heat transfer fluid. In the display system, these channels are often micro or nanoscale and are designed to maximize surface area for heat exchange while providing the controlled flow of the heat transfer fluid. Notably, the fluidic network can be carved integrated within the optical substrate of the system, ensuring an efficient transfer of the thermal energy without need for external piping or complex mechanical systems. The term "*pipe network*" refers to a structured arrangement of pipes or tubes, embedded within the optical substrate, designed to facilitate controlled flow of the heat transfer fluid. In the display system, the pipe network can be designed to circulate the heat transfer liquid from regions of high heat generation to regions where the heat can be dissipated more effectively, and/or to the heat exchanger.

In an operation, the heat transfer liquid absorbs the heat from components of the display system and/or other heat-sensitive areas of the display system. Once the heat transfer liquid is heated, it flows through the fluidic network or the pipe network, transferring the heat to the external heat exchanger. This design enables localized heat removal, preventing thermal buildup and maintaining components of the display system within the predefined operating temperature range. It will be appreciated that this configuration helps to enhance stability and performance of the display system by ensuring consistent thermal management without direct intervention. It will also be appreciated that maintaining components of the display system within the predefined operating temperature range can prolong their operational lifespan and ensure consistent visual quality of the display over time. A technical effect of the aforementioned feature is that it enables effective thermal regulation across the display system, maintaining the predefined operating temperature range to ensure consistent performance of the system.

Optionally, when the heat transfer element comprises the metal wiring and/or the carbon nanotubes, the arrangement of the heat transfer element in the optical substrate is implemented as at least one of:
the metal wiring being embedded and/or the carbon nanotubes being provided, within the optical substrate;
the metal wiring being arranged and/or the carbon nanotubes being provided, between the optical substrate and one of: the light emitting surface of the display, the cover glass of the display system.

In this regard, the metal wiring and/or the carbon nanotubes conduct the thermal energy away from components that generates heat within or near the display system. In one implementation, embedding the metal wiring and/or the carbon nanotubes being provided within the optical substrate establishes a direct thermal bridge, enabling rapid transfer of the thermal energy away from localized heat sources within or near the display system. Herein, the carbon nanotubes can be provided by: depositing the carbon nanotubes, or embedding the carbon nanotubes, or arranging the carbon nanotubes, or similar. This conductive pathway allows the heat generated by components to disperse effectively through the optical substrate, reducing localized temperature rise and promoting even thermal distribution. This configuration is particularly advantageous in managing thermal load of high-performance displays where temperature control is essential for stability of images and reliability of components. Notably, an arrangement of the metal wiring is a mesh arrangement, wherein the mesh arrangement refers to a network or a grid-like structure formed by an interconnected metal wires or thin metal strips. It will be appreciated that embedding the metal wiring and/or carbon nanotubes within the optical substrate provides a highly efficient means of thermal management, as it enables for direct conduction of the thermal energy from heat-sensitive areas, thus minimizing thermal buildup.

In another implementation, arranging the metal wiring and/or the carbon nanotubes being provided between the optical substrate and one of: the light-emitting surface of the display, the cover glass of the display system enables them to act as a thermal barrier, reducing transfer of the heat to heat-sensitive areas and dissipating it before it reaches essential components. In this regard, the metal wiring and/or the carbon nanotubes will absorb the thermal energy generated from components of the display system and/or from external sources. These materials then conduct the heat away from essential areas towards cooler regions and/or the external heat exchanger for further dissipation. It will be appreciated that the thermal barrier configuration helps to distribute the heat more uniformly across the display system, ensuring thermal stability and enhancing longevity of the heat-sensitive elements by preventing localized overheating. Moreover, the integration of the carbon nanotubes and/or the metal wiring within the display system provides a passive, highly efficient solution to temperature regulation, reducing need for an active cooling and thereby optimizing energy efficiency of the system.

A technical effect of the aforementioned feature is that it enhances heat dissipation, provides effective thermal management, reduces risk of an overheating, and improves performance and longevity of the display system.

Optionally, the display is divided into a plurality of regions, and the system comprises a plurality of first temperature sensors operable to measure first temperatures at the plurality of regions of the display, and wherein the processor is further configured to:
determine a priority order according to which the first temperatures of the plurality of regions are to be controlled, based on at least one of: the first temperatures of the plurality of regions, an importance level that is pre-assigned to a given virtual content that is to be presented via a given region of the display; and
control one or more first temperatures of one or more regions amongst the plurality of regions whose temperature lies outside the predefined operating temperature range, according to the priority order.

In this regard, the plurality of first temperature sensors are positioned to monitor the first temperatures in each region of the display, continuously or at intervals. At least two regions from amongst the plurality of regions could be same as or different from each other, depending on at least one of: a type of virtual content to be presented, a size of the virtual content, a shape of the virtual content, a location of a given region in the display. Optionally, a number of the first temperature sensors that correspond to the given region of the display may depend on a size of the given region of the display. Greater the size of the region of the display, greater is the number of first temperature sensors that correspond to the given region. In an example, for sake of simplicity and clarity, the display may have four regions of different sizes. Herein, the four regions are namely a first region, a second region, a third region, and a fourth region, wherein the first region and the second region are smaller than the third region, and the third region is smaller than the fourth region. Hence, the first region and the second region correspond to a single temperature sensor, the third region corresponds to two temperature sensors, and the fourth region corresponds to four temperature sensors. In another example, for sake of simplicity and clarity, the display may have four regions of same sizes, wherein each of the four regions corresponds to four temperature sensors. It will also be appreciated that it may not be necessary that each of the plurality of regions of the display is to be employed to present any virtual content. In other words, only some regions of the display may be employed to present any virtual content, while remaining regions of the display may not be employed to present any virtual content, and thus could be just empty spaces in the display. In such a case, the remaining regions of the display may not correspond to any temperature sensor.

Optionally, when determining the first temperatures of the plurality of regions of the display, the processor is configured to process temperature sensor data collected by the plurality of first temperature sensors, the temperature sensor data comprising readings of the first temperatures of the plurality of regions of the display as sensed by the plurality of first temperature sensors. Since the first temperatures of the plurality of regions are determined repeatedly, and the predefined operating temperature range is known, the processor could easily ascertain when the first temperatures lie outside the predefined operating temperature range.

However, when the first temperatures of the plurality of regions lie outside the predefined operating temperature range, the processor is configured to determine the priority order, and control the first temperatures of the plurality of regions according to the priority order. Herein, the term "*priority order*" refers to a sequence in which the first temperatures of the plurality of regions are to be controlled. In other words, when the first temperatures are to be controlled in the priority order, it means that a temperature of a region of the display having a highest priority in the priority order is controlled first, then a temperature of another region of the display having a second-highest priority in the priority order is controlled, then a temperature of yet another region of the display having a third-highest priority in the priority order is controlled, and so on. In an example, the priority order may be determined in a manner the first temperatures of the plurality of regions are controlled in a decreasing order of priorities of the plurality of regions. There will now be described each basis on which the priority order is determined.

It will be appreciated that when the first temperature of the given region lies closer to the predefined operating temperature range, it may be likely that the first temperature of the given region could be brought within the predefined operating temperature range (either by heating or cooling using the heat exchanger) in considerably lesser time, as compared to a case when the first temperature of the given region lies relatively farther from the predefined operating temperature range. Optionally, in the regard, when determining the priority order based on the first temperatures of the plurality of regions, the processor is configured to assign a higher priority to a region whose temperature lies closer to the predefined operating temperature range, as compared to another region whose temperature lies relatively farther from the predefined operating temperature range. In this regard, the phrase "relatively farther from the predefined operating temperature range" is to be considered relative to the term "closer to the predefined operating temperature range".

Once the priority order is determined, the first temperatures of the plurality of regions are controlled accordingly. Beneficially, in this way, a prioritized thermal control is implemented for the display system, which facilitates in presenting any virtual content in an accurate and convenient manner, especially, when critical information is to be presented (via the virtual content) to the viewer at a priority (such as immediately upon a vehicle start-up), in comparison to other type of information that is relatively less critical for the viewer at a given time.

A technical effect of the aforementioned feature is that it enables precise thermal management across different regions of the display, preventing localized overheating and optimizing performance of the display for high-priority areas. This ensures that critical areas are controlled first to prevent localized overheating. As a result, the system can achieve optimal performance more quickly, while managing the predefined operating temperature range across the entire display in a longer timeframe.

Optionally, the display system further comprises a backlight unit, the heat transfer element being arranged also in relation to the backlight unit. In this regard, the term "*backlight unit*" refers to a light-emitting element that is capable of illuminating and heating one or more regions of the display by way of producing white light. The backlight unit is commonly used in transmissive or semi-transmissive display technologies, such as in LCDs. The backlight unit is well-known in the art.

Typically, when the backlight unit is operated at full intensity, high electrical power is consumed to produce a maximum illumination (namely, brightness). Such illumination generates excess energy, part of which is released as heat. Greater the intensity with which the backlight unit is operated, greater is the electrical power consumed to produce a greater illumination, and consequently, greater is an amount of heat that is generated. To address this heat, the heat transfer element is placed in proximity or in contact with the backlight unit, to directly absorb and conduct the heat away from it. This may involve embedding the heat transfer element within structure of the backlight unit or positioning the heat transfer element on surfaces in proximity to the backlight unit. In this regard, the heat transfer element conducts the heat away from the backlight unit and transfers it to areas where it can be dissipated safely, such as to the heat exchanger. It will be appreciated that arrangement of the heat transfer element in relation to the backlight unit helps in managing the thermal energy effectively, thereby preventing excessive heat accumulation that could degrade performance and/or lifespan of the backlight unit. It will also be appreciated that this arrangement enhances an overall thermal stability of the display system, maintaining consistent brightness levels, improving durability, and ensuring reliability of the backlight unit during prolonged operation.

A technical effect of the aforementioned feature is that it enhances thermal regulation of the display system by efficiently managing the heat generated by the backlight unit.

Optionally, the display system is implemented in a device, and wherein the system further comprises a second temperature sensor that is operable to measure a second temperature of an external environment of the device, and wherein the processor is further configured to:
receive the second temperature from the second temperature sensor;
detect when the second temperature lies outside the predefined operating temperature range of the display system; and
control the heat exchanger to bring the first temperature of the display system within the predefined operating temperature range, via exchange of thermal energy between the heat exchanger and the heat transfer element, upon said detection.

In this regard, the term "*device"* refers to a machine or an apparatus that provides an operational environment for the display system and associated components. The term "*second temperature*" refers to a temperature value measured of the external environment of the device. Herein, the second temperature sensor is arranged in proximity to the device to measure the external temperature around the device. The second temperature sensor provides real-time temperature data to the processor, enabling continuous evaluation of whether the second temperature lies within the predefined operating temperature range of the display system. In this regard, if the second temperature is within the predefined operating temperature range, the display system continues normal operation without intervention. However, if the second temperature lies outside the predefined range, the processor is configured to initiate corrective actions. Notably, when the second temperature of the external environment of using the display system is out of the predefined operating temperature range, it can be understood that the temperature of the display system would also be out of said range. So, in such a case, the first temperature of the display system is brought into the predefined operating temperature range. In this way, the processor is configured to activate the heat exchanger to regulate the first temperature of the display system. The thermal energy is transferred through the heat transfer element to maintain or bring the first temperature within the predefined operating temperature range. Herein, if the second temperature is too high, the heat exchanger dissipates an excess heat away from the display system. Similarly, if the second temperature is too low, the heat exchanger could redistribute the heat to the display system, preventing it from falling below the predefined operating temperature range. It will be appreciated that this arrangement ensures consistent performance of the display system, maintaining optimal brightness, colour accuracy, and responsiveness even in challenging environmental conditions. It will also be appreciated that monitoring and regulating the first temperature of the display system based on the second temperature of the external environment enhances thermal stability, preventing performance degradation or damage caused by temperature extremes.

A technical effect of the aforementioned feature is that the system autonomously regulates the first temperature of the display system in response to the external environmental conditions, ensuring reliable operation within the predefined operating temperature range and preventing the system from exceeding or falling below the predefined operating temperature range at any time.

Optionally, the device is a vehicle, and the display system is a head-up display system. In this regard, the term "*head-up display system*" refers to a display that is capable of displaying an image to the user present in the vehicle. It will be appreciated that the head-up display (HUD) system is utilised to present visual information represented in the image to the user, without requiring the user to look considerably away from his/her usual viewpoint (for example, when looking towards a road on which the vehicle is being driven). Herein, the term "*visual information*" encompasses colour information represented in the image, and additionally, optionally other attributes (for example, such as depth information, illuminance information, transparency information, and the like) associated with the image. The vehicle could, for example, be a car, a truck, an aircraft, a speed boat, or the like. The car could be a convertible car or a hardtop car. The vehicle could also be a semi-open vehicle (for example, such as a boat). It will also be appreciated that the HUD could be a two-dimensional (2D) HUD that is capable of displaying images in a 2D manner i.e., without any depth perception, or be a 3D HUD that is capable of displaying images in an autostereoscopic manner, for example, by way of producing a synthetic light field. Head-up displays and their forms are well-known in the art. A technical effect of the aforementioned feature is that an integration of the HUD system in the vehicle with temperature control capabilities ensures that the HUD system operates within the predefined operating temperature range. This maintains optimal performance of the HUD system, prevents overheating or undercooling, thus ensuring longevity and reliability of the HUD system under varying environmental conditions. Additionally, this integration ensures that the HUD system remains within the predefined operating temperature range, while also considering constraints of battery capacity to maintain optimal performance and prevent thermal damage.

The present disclosure also relates to the second aspect as described above. Various embodiments and variants disclosed above, with respect to the aforementioned first aspect, apply *mutatis mutandis* to the second aspect.

Optionally, the display is divided into a plurality of regions, and the system comprises a plurality of first temperature sensors operable to measure first temperatures at the plurality of regions of the display, the method further comprising:
determining a priority order according to which the first temperatures of the plurality of regions are to be controlled, based on at least one of: the first temperatures of the plurality of regions, an importance level that is pre-assigned to a given virtual content that is to be presented via a given region of the display; and
controlling one or more first temperatures of one or more regions amongst the plurality of regions whose temperature lies outside the predefined operating temperature range, according to the priority order.

Optionally, the display system is implemented in a device, the method further comprising:
receiving a second temperature of an external environment of the device, from a second temperature sensor that is operable to measure the second temperature;
detecting when the second temperature lies outside the predefined operating temperature range of the display system; and
controlling the heat exchanger to bring the first temperature of the display system within the predefined operating temperature range, via exchange of thermal energy between the heat exchanger and the heat transfer element, upon said detection.

### DETAILED DESCRIPTION OF THE DRAWINGS

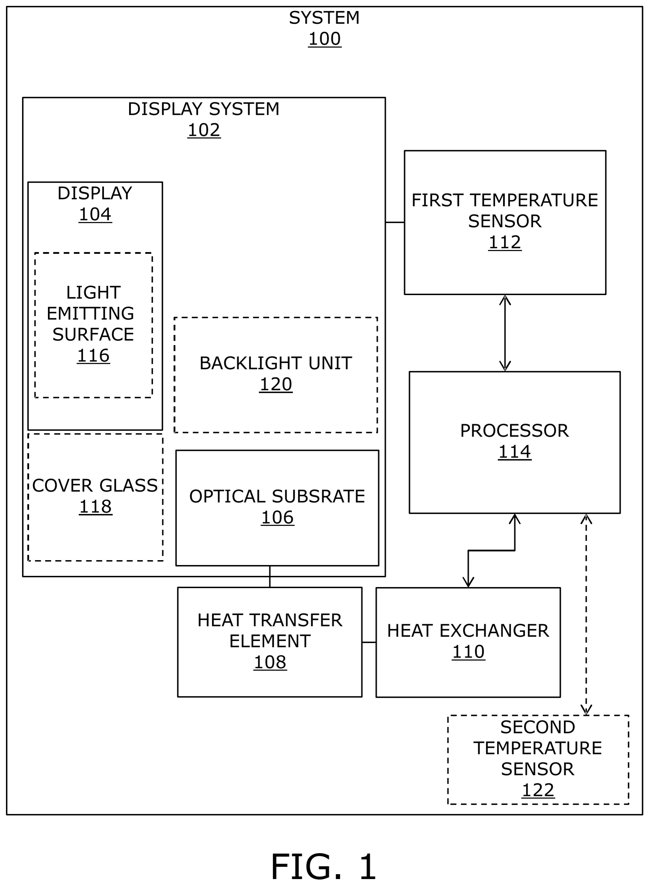

Referring to FIG. 1, illustrated is a block diagram of a system **100** for controlling temperature of a display system **102,** in accordance with an embodiment of the present disclosure. The display system **102** comprises a display **104** and an optical substrate **106** configured for autostereoscopic viewing. The system **100** comprises a heat transfer element **108** that is arranged at least in relation to the optical substrate **106,** a heat exchanger **110,** a first temperature sensor **112,** and a processor **114.** The processor **114** is communicably coupled to the heat exchanger **110** and the first temperature sensor **112.** The heat transfer element **108** is visually imperceptible when the system **100** is in use. The heat exchanger **110** is thermally coupled to the heat transfer element **108.** The first temperature sensor **112** is operable to measure a first temperature of the display system **102** at a first region. The processor **114** is configured to perform various operations, as described earlier with respect to the aforementioned first aspect.

Optionally, the display **104** comprises a light emitting surface **116.** Optionally, the display system **102** further comprises a cover glass **118.** Optionally, the display system **102** further comprises a backlight unit **120,** the heat transfer element **108** being arranged also in relation to the backlight unit **120.** Optionally, the system **100** further comprises a second temperature sensor **122** that is operable to measure a second temperature of an external environment of a device. Optionally, the processor **114** is communicably coupled to the second temperature sensor **122.**

FIG. 1 is merely an example, which should not unduly limit the scope of the claims herein. A person skilled in the art will recognize many variations, alternatives, and modifications of embodiments of the present disclosure.

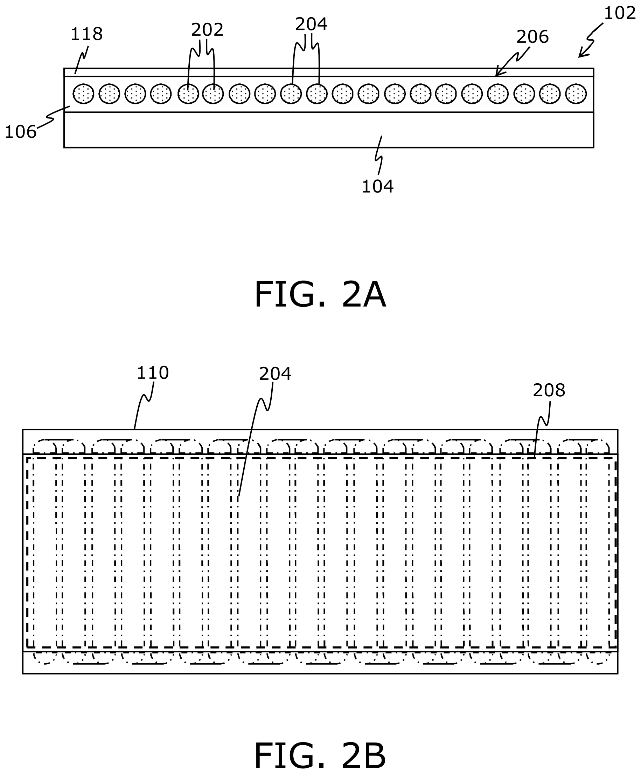

Referring to FIGs. 2A, and 2B, there is shown an exemplary implementation of the heat transfer element within the display system **102** of FIG. 1, in accordance with an embodiment of the present disclosure. In this regard, FIG. 2A is a side view of the display system **102.** FIG. 2B is a top view of the display system **102.**

In FIGs. 2A-B, the heat transfer element comprises a heat transfer liquid **202** (depicted by a dotted hatching). The heat transfer liquid **202** is filled in the fluidic network **204** carved within the optical substrate **106,** wherein the optical substrate **106** comprises a lenticular array element **206.**

In FIG. 2A, the heat transfer liquid **202** is implemented within the lenticular array element **206.** Notably, visual imperceptibility of the heat transfer liquid **202** is implemented as a refractive index of the heat transfer liquid **202** being matched with a refractive index of the lenticular array element **206.** Herein, the display system **102** comprises the display **104,** the cover glass **118,** and the heat exchanger (not shown for the sake of clarity). In FIG. 2B, there is shown a top view of the display system **102,** emphasizing an arrangement of the fluidic network **204** filled with the heat transfer liquid **202.** The top view of the display system **102** incorporates the heat transfer liquid **202** in conjunction with the heat exchanger **110** for thermal management. This figure highlights a viewing area (depicted as **208)** of the display system **102,** surrounded by the fluidic network **204** filled with the heat transfer liquid **202** for an efficient heat dissipation. Hence, the heat transfer liquid **202** remains visually imperceptible from both the top view and on the viewing area **208** of the display system **102.**

FIGs. 2A-B are merely examples, which should not unduly limit the scope of the claims herein. A person skilled in the art will recognize many variations, alternatives, and modifications of embodiments of the present disclosure.

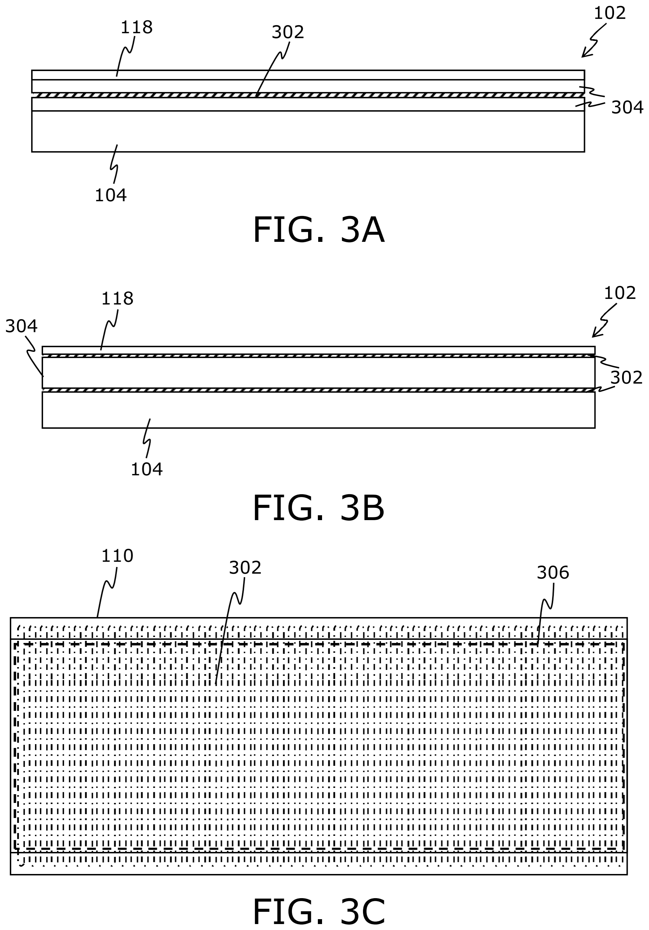

Referring to FIGs. 3A, 3B, and 3C, there is shown an exemplary implementation of the heat transfer element within the display system **102** of FIG. 1, in accordance with different embodiment of the present disclosure. In this regard, FIGs. 3A-B are side views of different implementations of the heat transfer element within the display system **102.** FIG. 3C is a top view of the display system **102.**

With reference to FIGs. 3A and 3B, the heat transfer element comprises a metal wiring **302** (depicted by diagonal striped hatching). Herein, the display system **102** comprises the display **104,** the cover glass **118,** the heat exchanger (not show for the sake of clarity), and the optical substrate, wherein the optical substrate comprises a lenticular array element **304.** Notably, the metal wiring **302** is distributed in a uniform pattern across the light emitting surface of the display **104.**

In FIG. 3A, there is shown a side view of the display system **102.** Herein, the metal wiring **302** is embedded, within the lenticular array element **304.** In FIG. 3B, there is shown a side view of the display system **102,** wherein the metal wiring **302** is being arranged between the lenticular array element **304** and one of: a light emitting surface of the display **104,** the cover glass **118** of the display system **102.** In FIG. 3C, there is shown a top view of the display system **102.** The figure highlights a display viewing area (depicted as **306)** covered by the uniform pattern of the metal wiring **302.** Herein, the top view of the display system **102** incorporates the metal wiring **302** in conjunction with the heat exchanger **110** for thermal management. This configuration ensures the efficient heat dissipation and highlights the display viewing area **306** where thermal regulation is particularly crucial.

FIGs. 3A-C are merely examples, which should not unduly limit the scope of the claims herein. A person skilled in the art will recognize many variations, alternatives, and modifications of embodiments of the present disclosure.

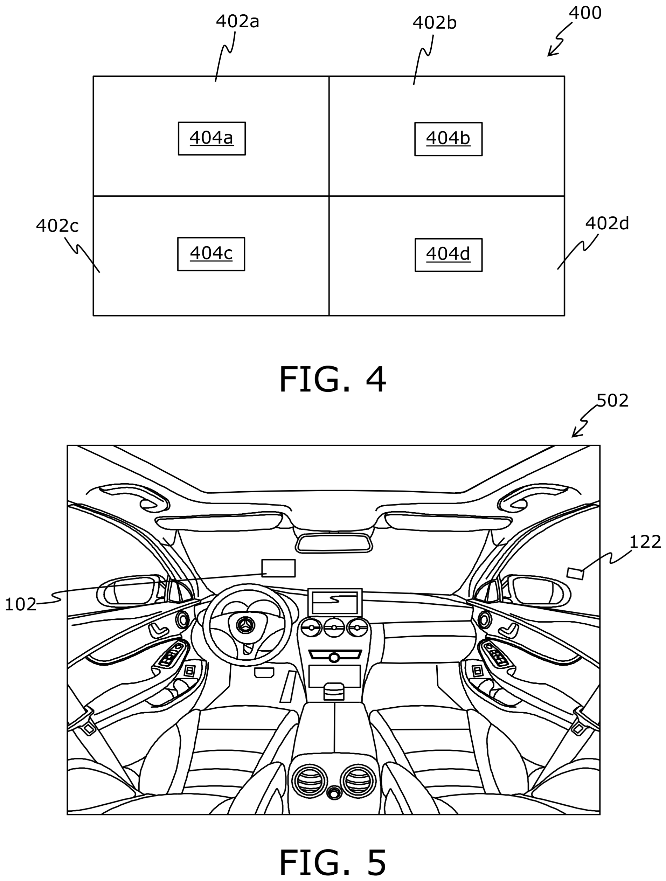

Referring to FIG. 4, there is shown an exemplary visualization a display **400** divided into a plurality of regions within a system, in accordance with an embodiment of the present disclosure. Herein, the plurality of regions are depicted as four regions **402a, 402b, 402c,** and **402d.** The system comprises a plurality of first temperature sensors (depicted as four first temperature sensors **404a, 404b, 404c,** and **404d)** operable to measure first temperatures at the plurality of regions **402a-d** of the display **400.** Herein, a processor (not shown for the sake of clarity) is configured to determine a priority order according to which the first temperatures of the plurality of regions **402a-d** are to be controlled, based on at least one of: the first temperatures of the plurality of regions **402a-d,** an importance level that is pre-assigned to a given virtual content that is to be presented via a given region of the display **400;** and control one or more first temperatures of one or more regions amongst the plurality of regions **402a-d** whose temperature lies outside the predefined operating temperature range, according to the priority order.

FIG. 4 is merely an example, which should not unduly limit the scope of the claims herein. A person skilled in the art will recognize many variations, alternatives, and modifications of embodiments of the present disclosure.

Referring to FIG. 5, there is shown an exemplary implementation of a system for controlling temperature of a display system **102** of FIG. 1 in a device **502,** in accordance with an embodiment of the present disclosure. In this exemplary implementation, the device **502** is a vehicle, and the display system **102** is a head-up display system. Optionally, the system **100** further comprises the second temperature sensor **122** that is operable to measure a second temperature of an external environment of the device **502.** The second temperature sensor **122** is arranged on a rear-view mirror of the vehicle to measure the second temperature of the external environment. Herein, a processor (not shown for the sake of clarity) is further configured to: receive the second temperature from the second temperature sensor **122;** detect when the second temperature lies outside the predefined operating temperature range of the display system **102;** and control the heat exchanger to bring the first temperature of the display system **102** within the predefined operating temperature range, via exchange of thermal energy between the heat exchanger and the heat transfer element, upon said detection.

FIG. 5 is merely an example, which should not unduly limit the scope of the claims herein. A person skilled in the art will recognize many variations, alternatives, and modifications of embodiments of the present disclosure.

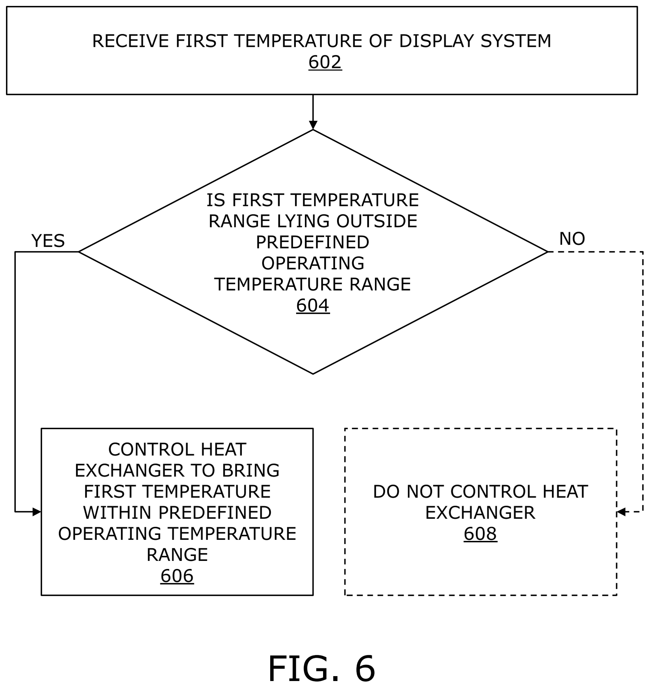

Referring to FIG. 6, illustrated are steps of a method for controlling temperature of a display system comprising a display and an optical substrate configured for autostereoscopic viewing, in accordance with an embodiment of the present disclosure. At step **602,** a first temperature of the display system is received from a first temperature sensor that is operable to measure the first temperature at a first region. At step **604,** it is detected whether the first temperature lies outside a predefined operating temperature range of the display system. When it is detected that the first temperature lies outside the predefined operating temperature range of the display system, at step **606,** a heat exchanger is controlled to bring the first temperature within the predefined operating temperature range, via exchange of thermal energy between the heat exchanger and a heat transfer element, wherein the heat transfer element is arranged at least in relation to the optical substrate, and wherein the heat transfer element is visually imperceptible when the system is in use. At step **608,** when it is detected the first temperature lies in a predefined operating temperature range of the display system, the heat exchanger is not controlled.

The aforementioned steps are only illustrative and other alternatives can also be provided where one or more steps are added, one or more steps are removed, or one or more steps are provided in a different sequence without departing from the scope of the claims herein.

## Claims

1. A system (100) for controlling temperature of a display system (102) comprising a display (104, 400) and an optical substrate (106) configured for autostereoscopic viewing, the system comprising:
a heat transfer element (108) arranged at least in relation to the optical substrate, wherein the heat transfer element is visually imperceptible when the system is in use;
a heat exchanger (110) thermally coupled to the heat transfer element;
a first temperature sensor (112) operable to measure a first temperature of the display system at a first region; and
a processor (114) configured to:
receive the first temperature, from the first temperature sensor;
detect when the first temperature lies outside a predefined operating temperature range of the display system; and
control the heat exchanger to bring the first temperature within the predefined operating temperature range, via exchange of thermal energy between the heat exchanger and the heat transfer element, upon said detection.

2. The system (100) according to claim 1, wherein the arrangement of the heat transfer element (108) in relation to the optical substrate (106) is at least one of:
the heat transfer element is arranged within the optical substrate;
the heat transfer element is arranged between the optical substrate and a light emitting surface (116) of the display (104, 400);
the heat transfer element is arranged between the optical substrate and a cover glass (118) of the display system (102).

3. The system (100) according to any of the preceding claims, wherein the heat transfer element (108) comprises at least one of: a heat transfer liquid (202), a metal wiring (302), carbon nanotubes, a phase change material, a thin-film thermoelectric material.

4. The system (100) according to claim 3, wherein when the heat transfer element (108) comprises the heat transfer liquid (202), the heat transfer liquid is filled in one of: a fluidic network (204) carved within the optical substrate (106), or a pipe network embedded within the optical substrate.

5. The system (100) according to claim 3 or 4, wherein when the heat transfer element (108) comprises the metal wiring (302) and/or the carbon nanotubes, the arrangement of the heat transfer element in the optical substrate (106) is implemented as at least one of:
the metal wiring being embedded and/or the carbon nanotubes being provided, within the optical substrate;
the metal wiring being arranged and/or the carbon nanotubes being provided, between the optical substrate and one of: the light emitting surface (116) of the display (104, 400), the cover glass (118) of the display system (102).

6. The system (100) according to any of the preceding claims, wherein the visual imperceptibility of the heat transfer element (108) is implemented as at least one of:
a refractive index of the heat transfer element being matched with a refractive index of the optical substrate (106);
at least one of: an amount, a position, a layout, a thickness, of the heat transfer element being adjusted in a manner that minimizes visibility thereof.

7. The system (100) according to any of the preceding claims, wherein the display (104, 400) is divided into a plurality of regions (402a-d), and the system comprises a plurality of first temperature sensors (404a-d) operable to measure first temperatures at the plurality of regions of the display, and wherein the processor (114) is further configured to:
determine a priority order according to which the first temperatures of the plurality of regions are to be controlled, based on at least one of: the first temperatures of the plurality of regions, an importance level that is pre-assigned to a given virtual content that is to be presented via a given region of the display; and
control one or more first temperatures of one or more regions amongst the plurality of regions whose temperature lies outside the predefined operating temperature range, according to the priority order.

8. The system (100) according to any of the preceding claims, wherein the display system (102) further comprises a backlight unit (120), the heat transfer element (108) being arranged also in relation to the backlight unit.

9. The system (100) according to any of the preceding claims, wherein the display system (102) is implemented in a device (502), and wherein the system further comprises a second temperature sensor (122) that is operable to measure a second temperature of an external environment of the device, and wherein the processor (114) is further configured to:
receive the second temperature from the second temperature sensor;
detect when the second temperature lies outside the predefined operating temperature range of the display system; and
control the heat exchanger (110) to bring the first temperature of the display system within the predefined operating temperature range, via exchange of thermal energy between the heat exchanger and the heat transfer element (108), upon said detection.

10. The system (100) according to claim 9, wherein the device (502) is a vehicle, and wherein the display system (102) is a head-up display system.

11. The system (100) according to any of the preceding claims, wherein the optical substrate (106) configured for autostereoscopic viewing comprises at least one of: a lenticular array element (206, 304), a parallax barrier, a layer of an optical material, a diffuser.

12. A method for controlling temperature of a display system (102) comprising a display (104, 400) and an optical substrate (106) configured for autostereoscopic viewing, the method comprising:
receiving a first temperature of the display system from a first temperature sensor (112) that is operable to measure the first temperature at a first region;
detecting when the first temperature lies outside a predefined operating temperature range of the display system; and
controlling a heat exchanger (110) to bring the first temperature within the predefined operating temperature range, via exchange of thermal energy between the heat exchanger and a heat transfer element (108), upon said detection, wherein the heat transfer element is arranged at least in relation to the optical substrate, and wherein the heat transfer element is visually imperceptible when the system (100) is in use.

13. The method according to claim 12, wherein the display (104, 400) is divided into a plurality of regions (402a-d), and the system (100) comprises a plurality of first temperature sensors (404a-d) operable to measure first temperatures at the plurality of regions of the display, the method further comprising:
determining a priority order according to which the first temperatures of the plurality of regions are to be controlled, based on at least one of: the first temperatures of the plurality of regions, an importance level that is pre-assigned to a given virtual content that is to be presented via a given region of the display; and
controlling one or more first temperatures of one or more regions amongst the plurality of regions whose temperature lies outside the predefined operating temperature range, according to the priority order.

14. The method according to claims 12-13, wherein the display system (102) is implemented in a device (502), the method further comprising:
receiving a second temperature of an external environment of the device, from a second temperature sensor (122) that is operable to measure the second temperature;
detecting when the second temperature lies outside the predefined operating temperature range of the display system; and
controlling the heat exchanger (110) to bring the first temperature of the display system within the predefined operating temperature range, via exchange of thermal energy between the heat exchanger and the heat transfer element (108), upon said detection.
